# EUROPEAN PATENT APPLICATION

(11) **EP 4 814 779 A1**
(43) Date of publication of application: **30.09.2026**
(21) Application number: 24893771.6
(22) Date of filing: 29.03.2024
(51) Int. Cl.: G06F 40/131, G06F 16/338

(54) **RETRIEVAL DEVICE AND CONTROL METHOD**

(30) Priority: 22.11.2023 US 202363601985 P
(71) Applicant: PANASONIC INTELLECTUAL PROPERTY MANAGEMENT CO., LTD., Kadoma-shi, Osaka 571-0057 (JP)
(72) Inventor: SHIMAYA, Jiro, Kadoma-shi, Osaka 571-0057 (JP); YAMANISHI, Kouhei, Kadoma-shi, Osaka 571-0057 (JP); KYURAGI, Yuta, Kadoma-shi, Osaka 571-0057 (JP); ENDO, Mitsuru, Kadoma-shi, Osaka 571-0057 (JP); OGAWA, Kento, Kadoma-shi, Osaka 571-0057 (JP)
(74) Representative: Novagraaf International SA
(86) International application number: PCT/JP2024/013012
(87) International publication number: WO 2025/109775

(57) **Abstract**

A search device (4) includes: an obtainer (14) that obtains the document data; and an analyzer (16) that analyzes a document structure of the document data based on font information about a font of a character included in the document data obtained by the obtainer (14) and border information about a border included in the document data.

## Description

### [Technical Field]

The present disclosure relates to a search device for searching document data for information desired by a user, and to a control method thereof.

### [Background Art]

An instruction manual search device is known which, when a user inputs a question related to an instruction manual for a household appliance or the like into a smartphone or the like, displays the part of the instruction manual that serves as the basis of an answer on the smartphone or the like with highlighting (for example, see Patent Literature (PTL) 1). In this instruction manual search device, document data of the instruction manual is obtained in advance, and the document structure of the document data is analyzed by detecting paragraphs based on coordinates of the characters included in the obtained document data.

### [Citation List]

### [Patent Literature]

[PTL 1] Japanese Unexamined Patent Application Publication No. 2006-48605

### [Summary of Invention]

### [Technical Problem]

In the conventional instruction manual search device described above, when analyzing the document structure of document data, there is a risk of two sentences which are visually a single paragraph but are distanced from each other being erroneously detected as different paragraphs.

Accordingly, the present disclosure provides a search device capable of accurately analyzing a document structure of document data, and a control method thereof.

### [Solution to Problem]

A search device according to one aspect of the present disclosure is a search device for searching document data for information desired by a user, the search device including: an obtainer that obtains the document data; and an analyzer that analyzes a document structure of the document data based on font information about a font of a character included in the document data obtained by the obtainer and border information about a border included in the document data.

Note that these comprehensive or specific aspects may be realized by a system, a method, an integrated circuit, a computer program, or a computer-readable recording medium such as a Compact Disc-Read Only Memory (CD-ROM), or may be implemented by any desired combination of systems, devices, methods, integrated circuits, computer programs, and recording media.

### [Advantageous Effects of Invention]

According to the search device and the like according to one aspect of the present disclosure, a document structure of document data can be accurately analyzed.

### [Brief Description of Drawings]

[FIG. 1]

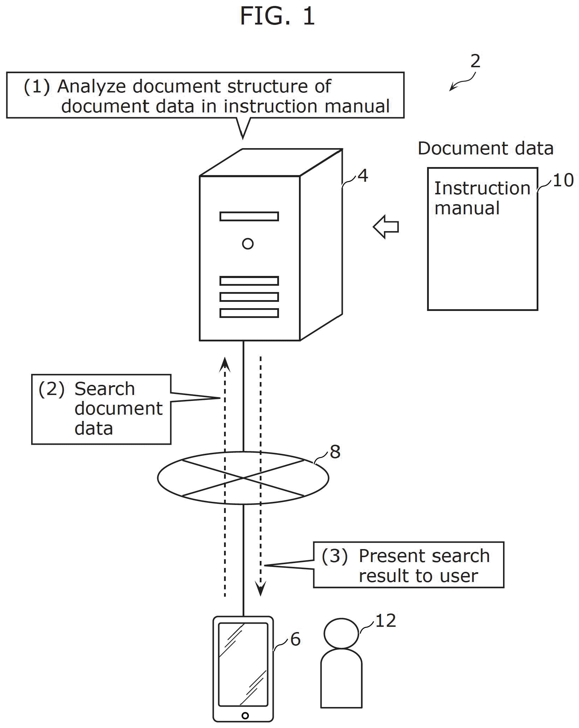

   FIG. 1 is a conceptual diagram illustrating an overview of a search system according to an embodiment.
[FIG. 2]

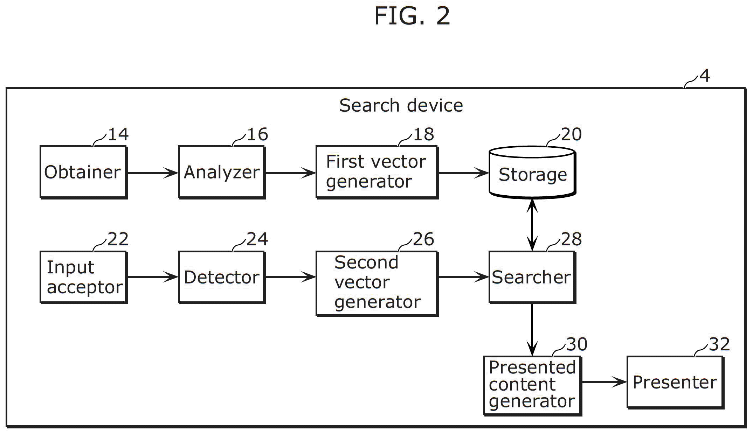

   FIG. 2 is a block diagram illustrating the functional configuration of a search device according to the embodiment.
[FIG. 3]

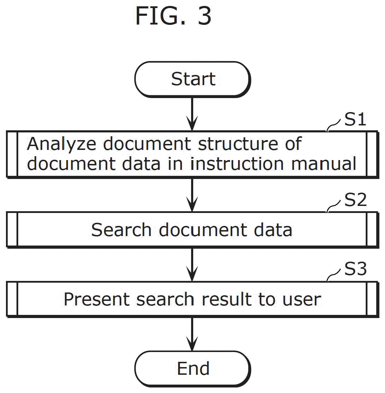

   FIG. 3 is a flowchart illustrating the flow of overall operations by the search device according to the embodiment.
[FIG. 4]

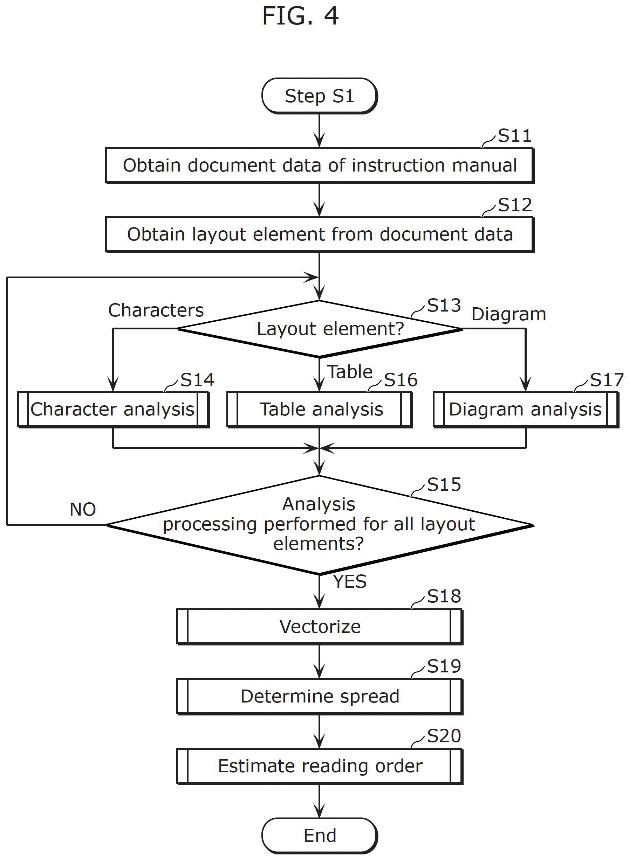

   FIG. 4 is a flowchart illustrating step S1 of the flowchart in FIG. 3 in detail.
[FIG. 5]

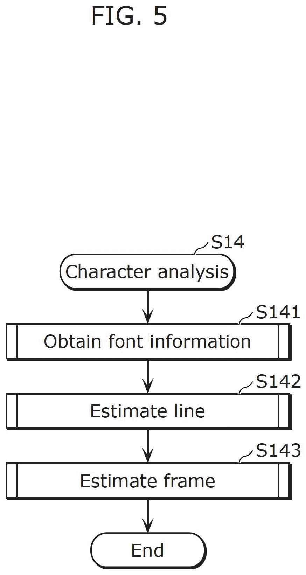

   FIG. 5 is a flowchart illustrating step S14 of the flowchart in FIG. 4 in detail.
[FIG. 6]

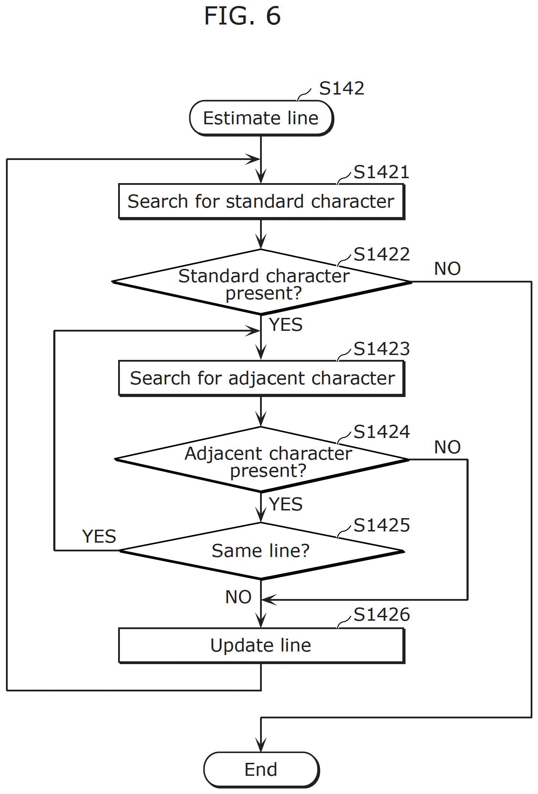

   FIG. 6 is a flowchart illustrating step S142 of the flowchart in FIG. 5 in detail.
[FIG. 7]

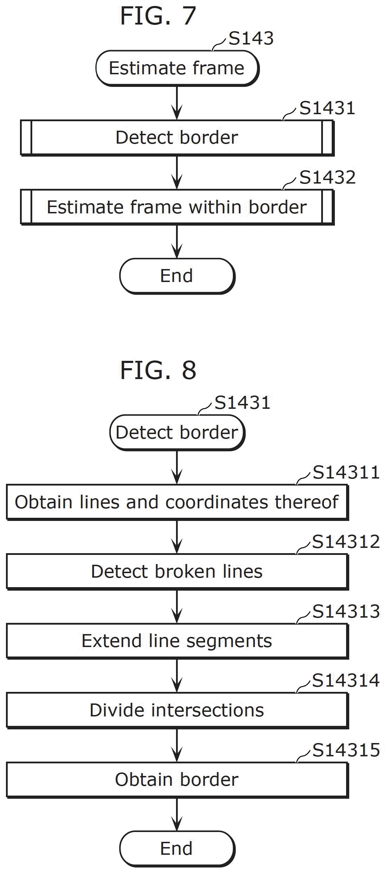

   FIG. 7 is a flowchart illustrating step S143 of the flowchart in FIG. 5 in detail.
[FIG. 8]
   FIG. 8 is a flowchart illustrating step S1431 of the flowchart in FIG. 7 in detail.
[FIG. 9]

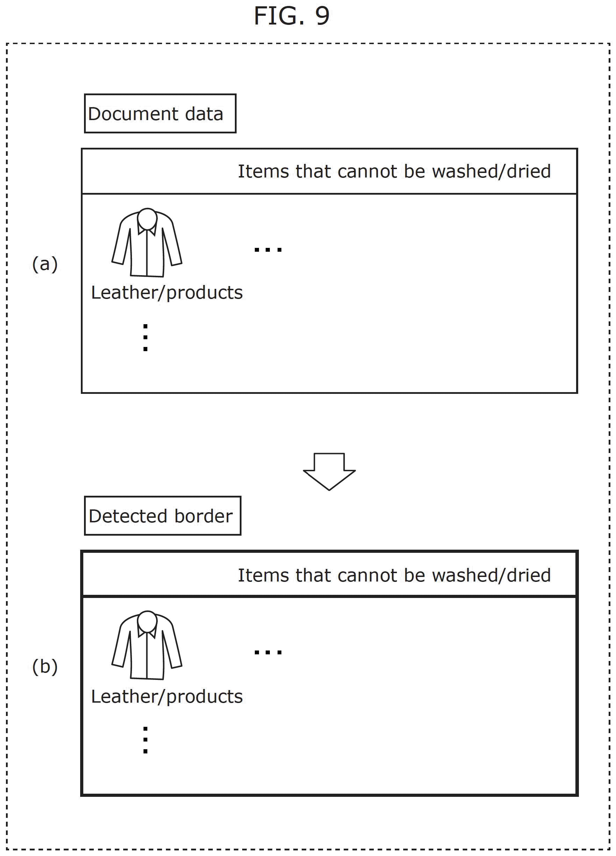

   FIG. 9 is a diagram illustrating an example of borders detected in document data.
[FIG. 10]

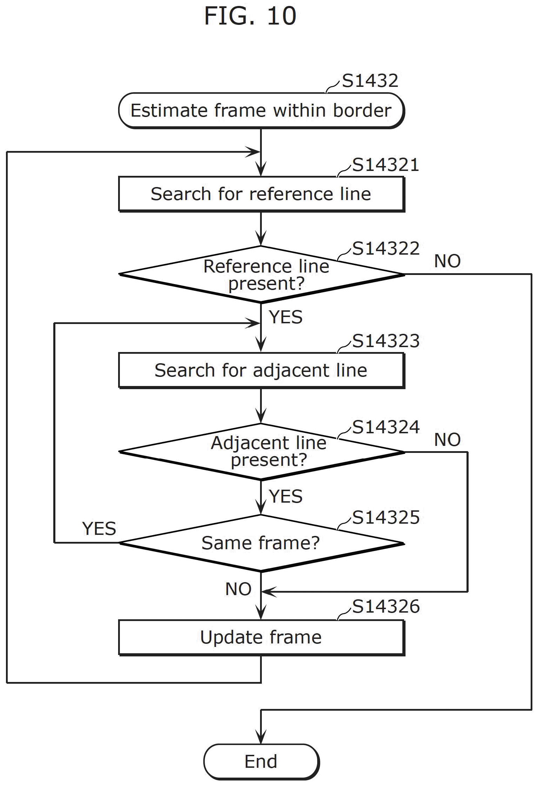

   FIG. 10 is a flowchart illustrating step S1432 of the flowchart in FIG. 7 in detail.
[FIG. 11]

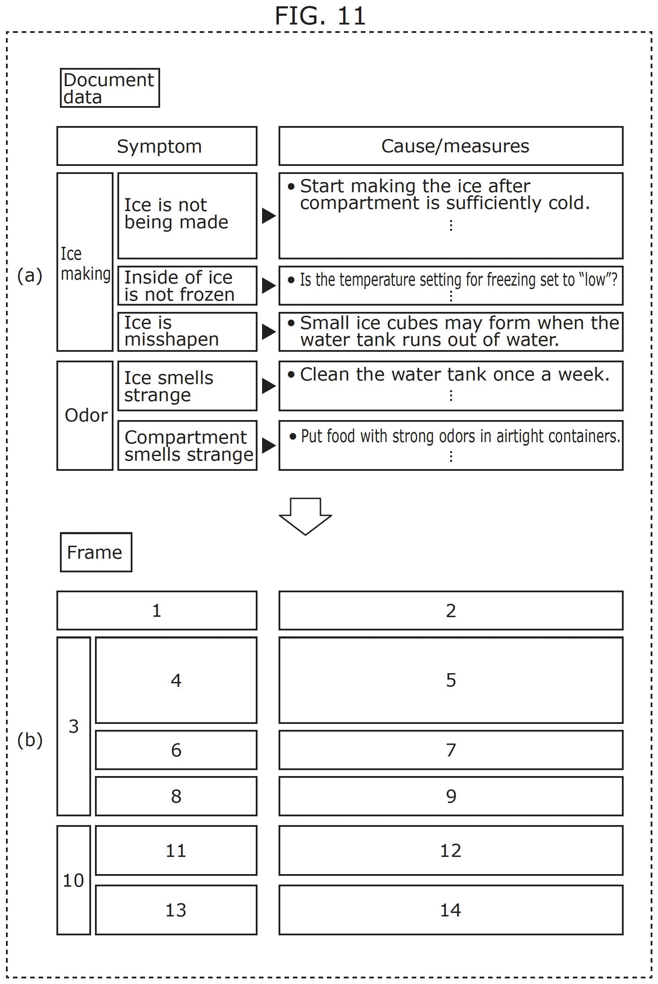

   FIG. 11 is a diagram illustrating an example of estimated frames in the document data.
[FIG. 12]

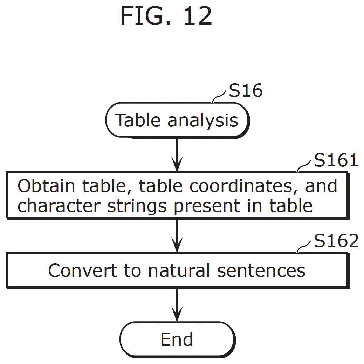

   FIG. 12 is a flowchart illustrating step S16 of the flowchart in FIG. 4 in detail.
[FIG. 13]

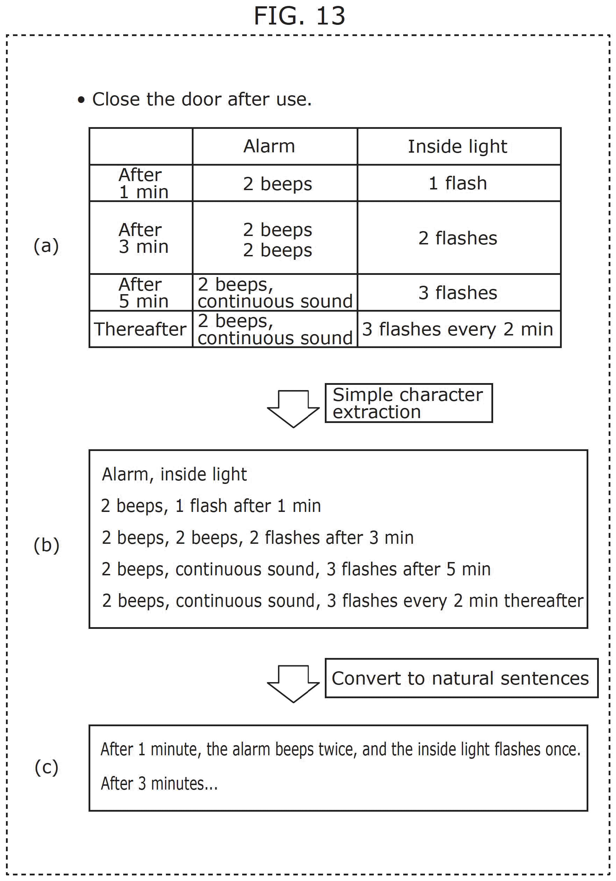

   FIG. 13 is a diagram illustrating details of step S16 of the flowchart in FIG. 4.
[FIG. 14]

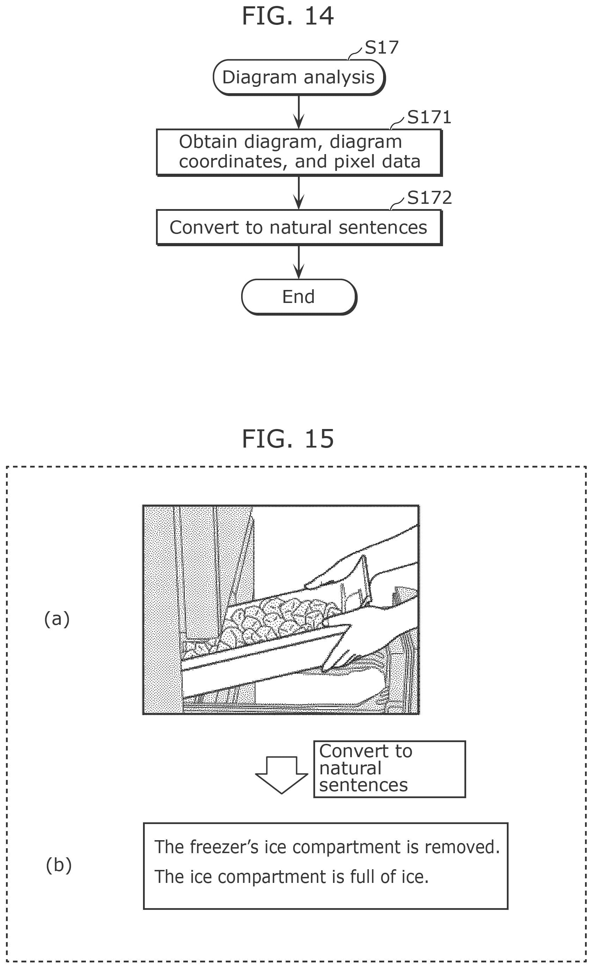

   FIG. 14 is a flowchart illustrating step S17 of the flowchart in FIG. 4 in detail.
[FIG. 15]
   FIG. 15 is a diagram illustrating details of step S17 of the flowchart in FIG. 4.
[FIG. 16]

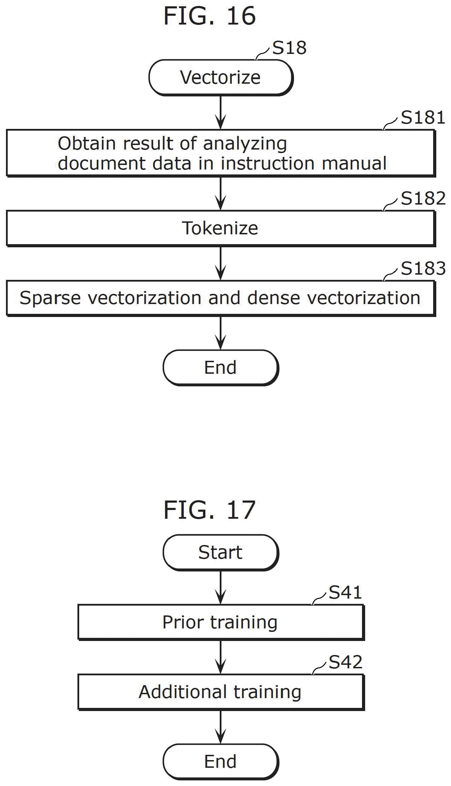

   FIG. 16 is a flowchart illustrating step S18 of the flowchart in FIG. 4 in detail.
[FIG. 17]
   FIG. 17 is a flowchart illustrating an example of a sequence for generating a dense vector model.
[FIG. 18]

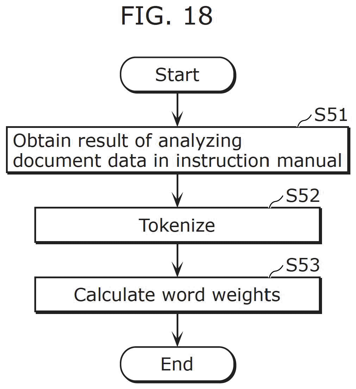

   FIG. 18 is a flowchart illustrating an example of a sequence for generating a sparse vector model.
[FIG. 19]

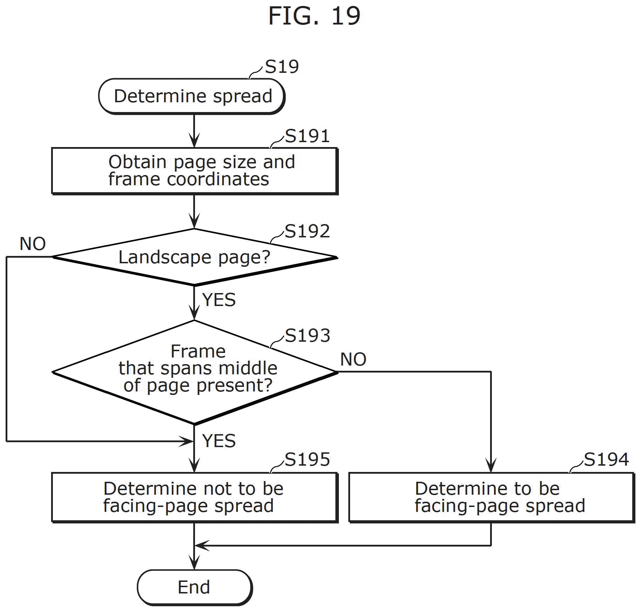

   FIG. 19 is a flowchart illustrating step S19 of the flowchart in FIG. 4 in detail.
[FIG. 20]

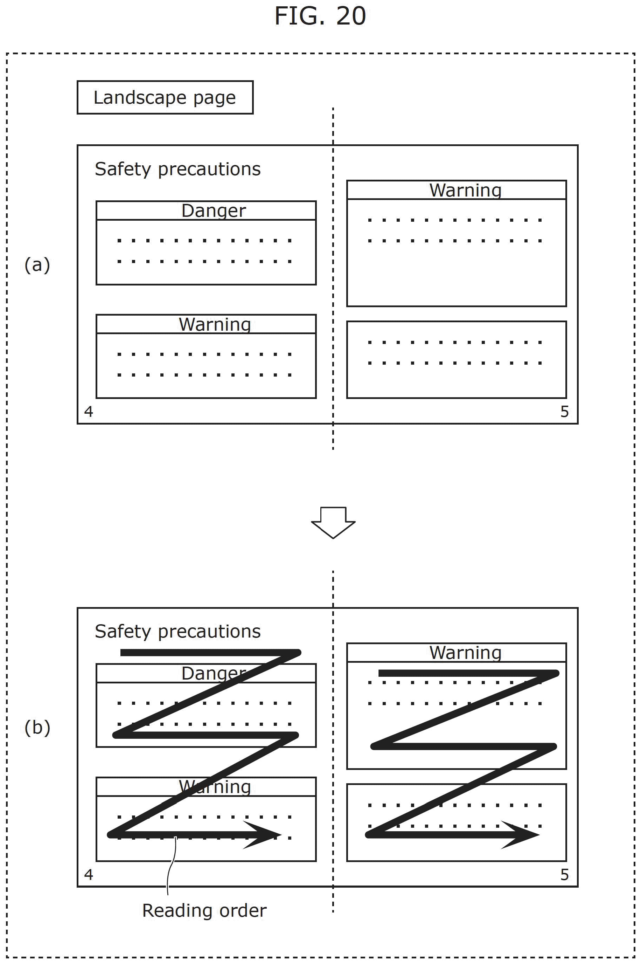

   FIG. 20 is a diagram illustrating details of the flowchart in FIG. 19.
[FIG. 21]

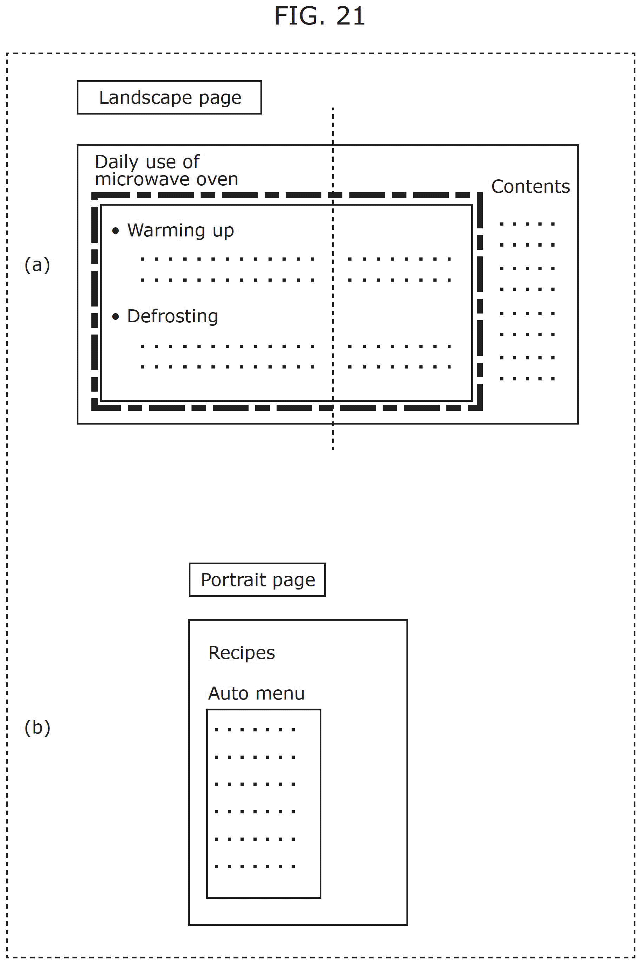

   FIG. 21 is a diagram illustrating details of the flowchart in FIG. 19.
[FIG. 22]

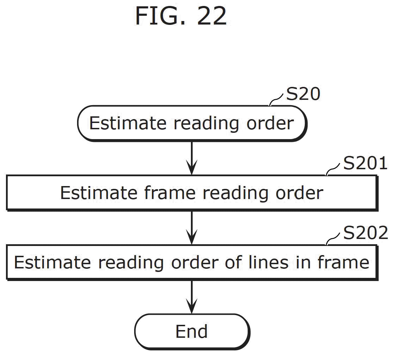

   FIG. 22 is a flowchart illustrating step S20 of the flowchart in FIG. 4 in detail.
[FIG. 23]

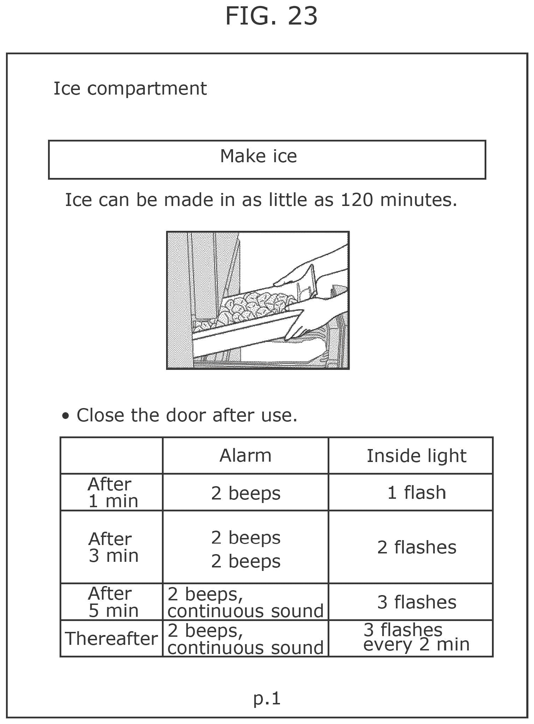

   FIG. 23 is a diagram illustrating an example of document data of an instruction manual.
[FIG. 24]

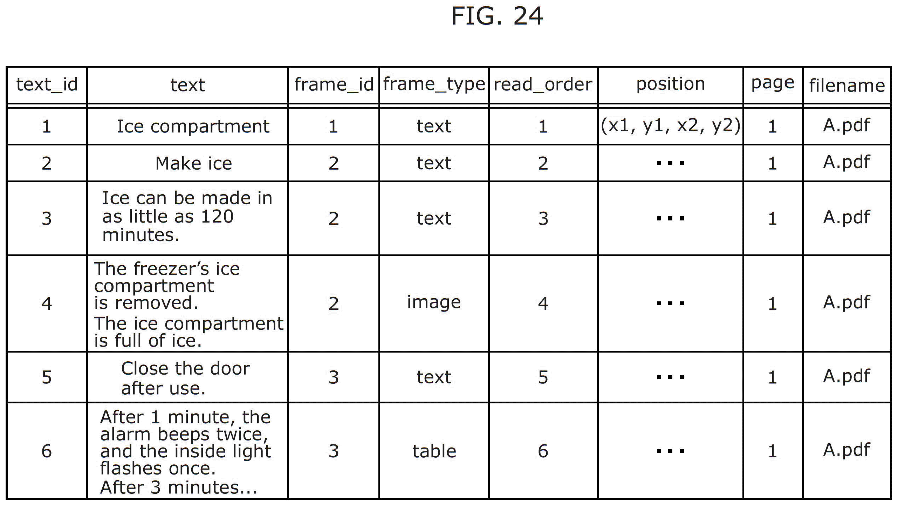

   FIG. 24 is a diagram illustrating an example of a document data analysis result from an analyzer.
[FIG. 25]

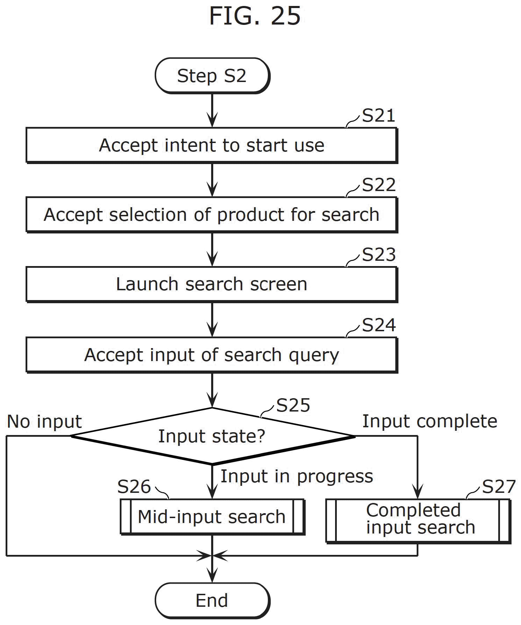

   FIG. 25 is a flowchart illustrating step S2 of the flowchart in FIG. 3 in detail.
[FIG. 26]

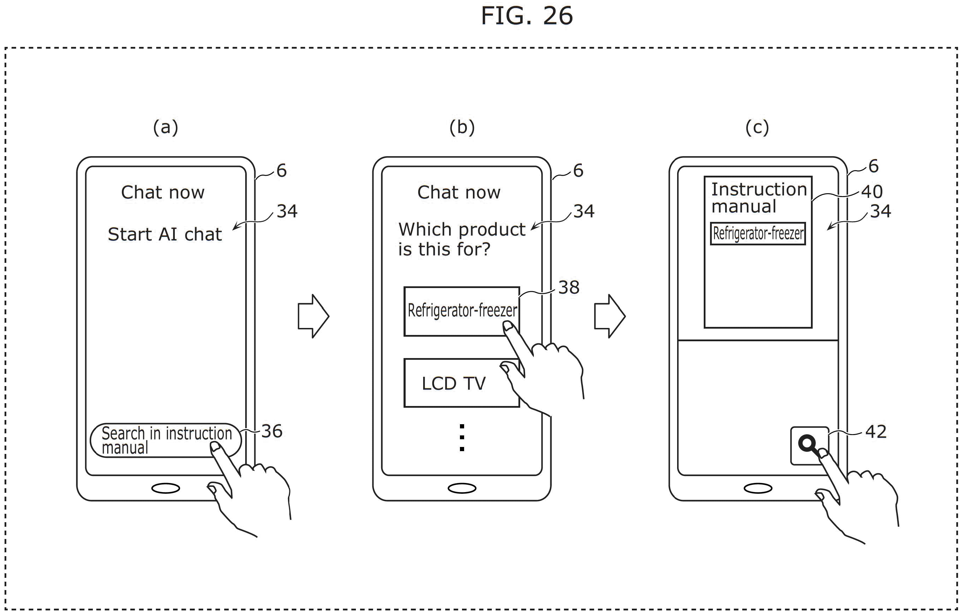

   FIG. 26 is a diagram illustrating details of step S2 of the flowchart in FIG. 3.
[FIG. 27]

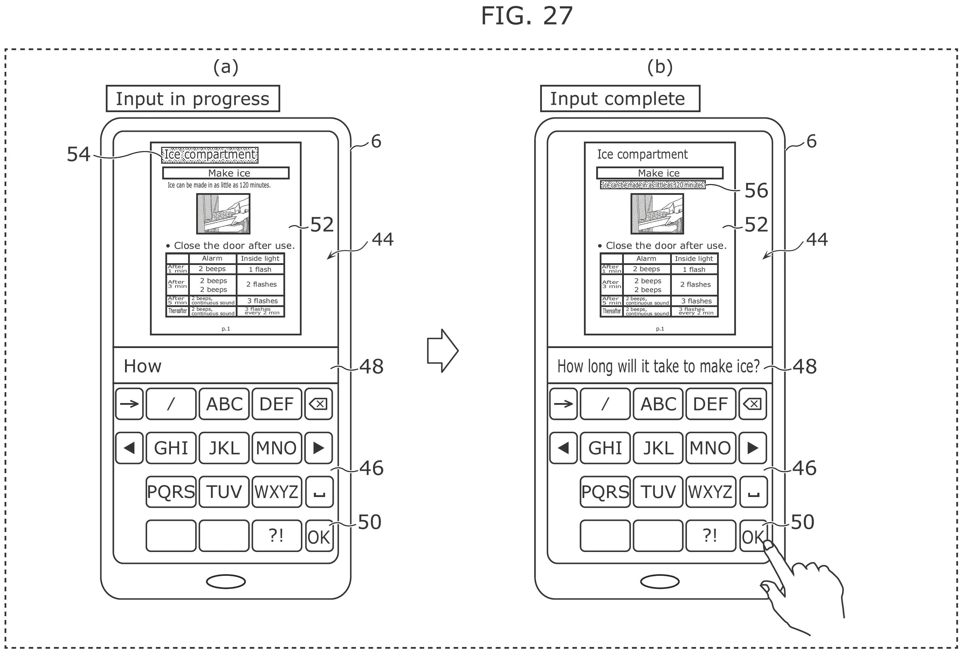

   FIG. 27 is a diagram illustrating details of step S2 of the flowchart in FIG. 3.
[FIG. 28]

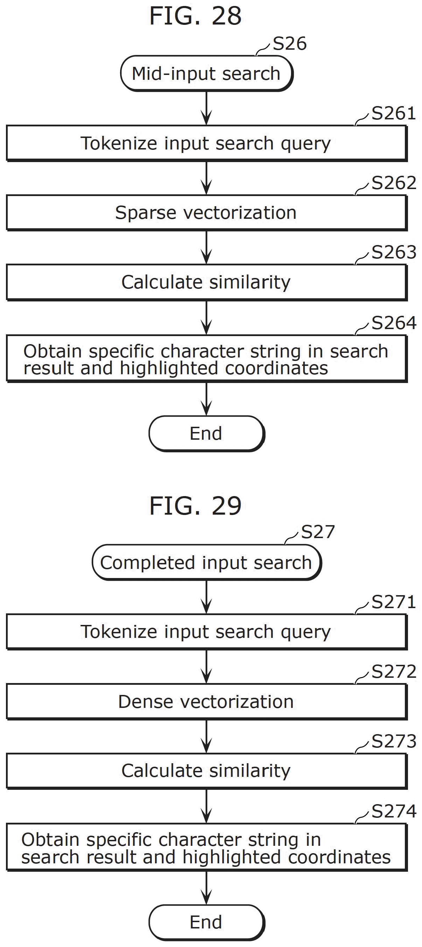

   FIG. 28 is a flowchart illustrating step S26 of the flowchart in FIG. 25 in detail.
[FIG. 29]
   FIG. 29 is a flowchart illustrating step S27 of the flowchart in FIG. 25 in detail.
[FIG. 30]

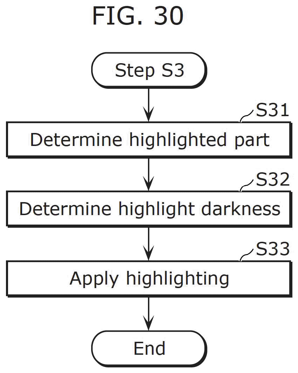

   FIG. 30 is a flowchart illustrating step S3 of the flowchart in FIG. 3 in detail.
[FIG. 31]

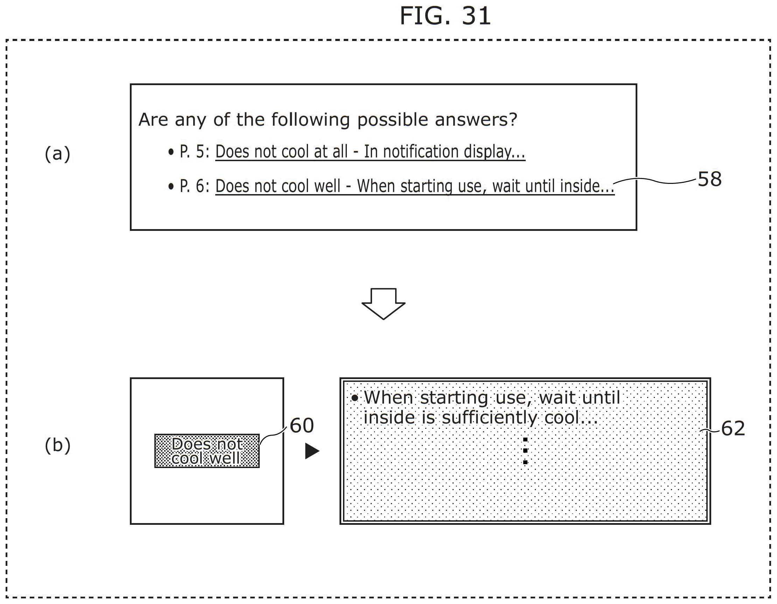

   FIG. 31 is a diagram illustrating another example of the presentation of a search result by a presenter.
[FIG. 32]

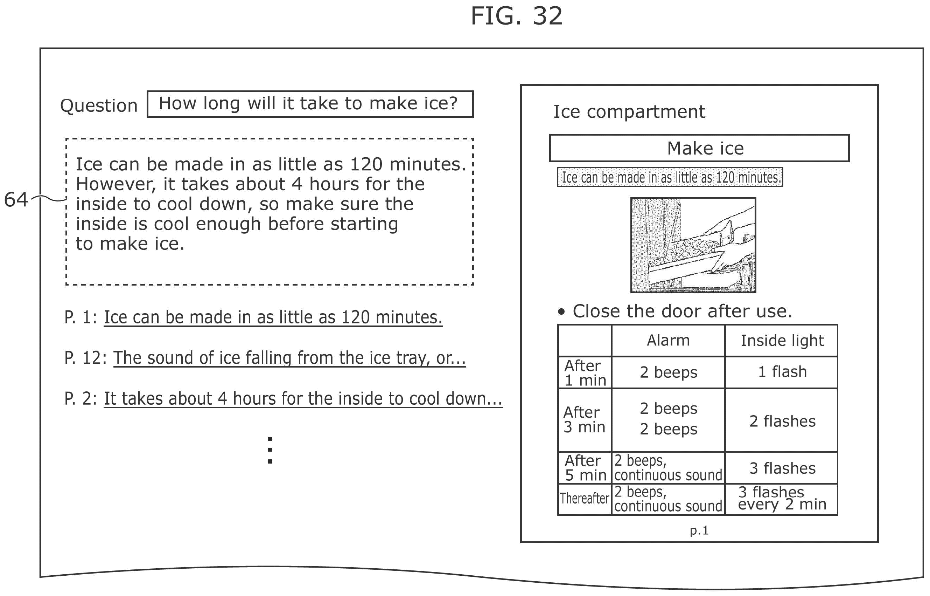

   FIG. 32 is a diagram illustrating another example of the presentation of a search result by a presenter.

### [Description of Embodiments]

### (Technique 1)

A search device for searching document data for information desired by a user, the search device including: an obtainer that obtains the document data; and an analyzer that analyzes a document structure of the document data based on font information about a font of a character included in the document data obtained by the obtainer and border information about a border included in the document data.

According to Technique 1, the analyzer analyzes the document structure of the document data based on the font information and the border information. Through this, even when at least two sentences are separated by a distance, for example, the at least two sentences can be treated as sentences strongly related to each other based on the font information and the border information. As a result, the document structure of the document data can be analyzed accurately.

### (Technique 2)

The search device according to Technique 1, wherein the analyzer analyzes the document structure of the document data by (i) estimating, based on the font information, a group of characters having a same font and for which a distance between adjacent ones of the characters in a first direction is shorter than a font size, as a line in the document data, and (ii) estimating a group of lines, each being the line, for which a distance between adjacent ones of the lines in a second direction orthogonal to the first direction is shorter than the font size, as a frame in the document data.

According to Technique 2, by estimating a frame in the document data, two or more sentences in the frame can be treated as sentences which are strongly related to each other. As a result, the document structure of the document data can be analyzed accurately.

### (Technique 3)

The search device according to Technique 2, wherein the analyzer (i) obtains, as the border information, coordinates of each of a plurality of line segments, among a plurality of line segments included in the document data, that form a closed region, and detects, as the border, the plurality of line segments obtained, and (ii) estimates, based on the border information, a group of the lines present within the border as being a same frame, the frame being the frame estimated by the analyzer.

According to Technique 3, by estimating a group of rows contained within the border as being the same frame, at least two sentences within the border can be treated as sentences which are strongly related to each other. As a result, the document structure of the document data can be analyzed accurately.

### (Technique 4)

The search device according to Technique 2 or 3, wherein the document data is written horizontally, and when a plurality of frames, each being the frame, are estimated, the analyzer assigns, to the plurality of frames, a first reading order that is an order for reading the plurality of frames from left to right and top to bottom.

According to Technique 4, by assigning the first reading order to the plurality of frames, the document structure of the document data can be analyzed more accurately by taking into account the semantic connections of the plurality of frames.

### (Technique 5)

The search device according to Technique 4, wherein when a plurality of lines, each being the line, are estimated in the frame, the analyzer further assigns, to the plurality of lines in the frame, a second reading order that is an order for reading the plurality of lines from left to right and top to bottom.

According to Technique 5, by assigning the second reading order to the plurality of lines in the frame, the document structure of the document data can be analyzed more accurately by taking into account the semantic connections of the plurality of lines in the frame.

### (Technique 6)

The search device according to any one of Techniques 1 to 5, further including: an input acceptor that accepts an input of a search query from the user; a first vector generator that generates a first vector by vectorizing the document data analyzed by the analyzer; a second vector generator that generates a second vector by vectorizing the search query accepted by the input acceptor; and a searcher that calculates a similarity between the first vector and the second vector, and extracts a specific character string from the document data as a search result for the search query based on the similarity calculated.

According to Technique 6, because the document structure of document data can be analyzed accurately as described above, the accuracy of the search by the searcher can be improved.

### (Technique 7)

The search device according to Technique 6, wherein the first vector generator generates a first sparse vector and a first dense vector as the first vector, the second vector generator generates a second sparse vector and a second dense vector as the second vector, and the searcher (i) calculates a first similarity between the first sparse vector and the second sparse vector as the similarity when input of the search query by the user is in progress, and (ii) calculates a second similarity between the first dense vector and the second dense vector as the similarity when the input of the search query by the user is complete.

According to Technique 7, if the input of the search query by the user is in progress, a search for an exact match for the word is performed, for example, by calculating a first similarity between the first sparse vector and the second sparse vector. This provides a search result which is highly satisfactory for a user who is familiar with the content of the document data and is therefore able to input an appropriate search query. On the other hand, if the input of the search query by the user is complete, calculating the second similarity between the first dense vector and the second dense vector makes it possible to obtain a sentence or the like that is not a perfect match as the search result. This provides a search result which is highly satisfactory for a user who is unfamiliar with the content of the document data and therefore has difficulty inputting an appropriate search query. By switching between a sparse vector search and a dense vector search according to whether the input of the search query is in progress or complete, more satisfying search results can be provided to all users.

### (Technique 8)

The search device according to Technique 6 or 7, further including: a presenter that presents the search result from the searcher to the user, the presenter displaying the specific character string extracted by the searcher with emphasis in a display format that is based on the similarity.

According to Technique 8, by highlighting the specific character string extracted by the searcher in a display format based on the similarity, the user can easily recognize the search result on which they should focus.

### (Technique 9)

The search device according to Technique 8, wherein the presenter displays the specific character string with highlighting in a display format in which a color darkens as the similarity increases.

According to Technique 9, highlighting the specific character string in a display format in which the color darkens as the similarity increases makes it easier for the user to recognize the search result on which they should focus.

### (Technique 10)

The search device according to Technique 6 or 7, further including: a presenter that presents the search result from the searcher to the user, the presenter generating a summary of an answer based on the search result from the searcher and displaying the summary generated.

According to Technique 10, displaying a summary of the answer makes it easy for the user to understand the content of the answer.

### (Technique 11)

A control method for a search device for searching document data for information desired by a user, the control method including: (a) obtaining the document data; and (b) analyzing a document structure of the document data based on font information about a font of a character included in the document data obtained in (a) and border information about a border included in the document data.

According to Technique 11, the document structure of the document data is analyzed based on the font information and the border information. Through this, even when at least two sentences are separated by a distance, for example, the at least two sentences can be treated as sentences strongly related to each other based on the font information and the border information. As a result, the document structure of the document data can be analyzed accurately.

### (Technique 12)

A program for causing a computer to execute the control method according to Technique 11.

Note that these comprehensive or specific aspects may be realized by a system, a method, an integrated circuit, a computer program, or a computer-readable recording medium such as a CD-ROM, or may be implemented by any desired combination of systems, devices, methods, integrated circuits, computer programs, or recording media.

An embodiment will be described in detail hereinafter with reference to the drawings.

The following embodiment will describe general or specific examples. The numerical values, shapes, materials, constituent elements, arrangements and connection states of constituent elements, steps, orders of steps, and the like in the following embodiment are merely examples, and are not intended to limit the present disclosure. Additionally, of the constituent elements in the following embodiment, constituent elements not denoted in the independent claims, which express the broadest interpretation, will be described as optional constituent elements.

### [Embodiment]

### [1. Overview of Search System]

First, an overview of search system 2 according to an embodiment will be described with reference to FIG. 1. FIG. 1 is a conceptual diagram illustrating an overview of search system 2 according to the embodiment.

As illustrated in FIG. 1, search system 2 includes search device 4 and terminal device 6. Search device 4 and terminal device 6 can communicate with each other over network 8, which is the Internet or the like.

Search device 4 is a device for searching document data of instruction manual 10 for information desired by user 12, and is constituted by a server or the like, for example. Search device 4 obtains the document data of instruction manual 10 in advance from an external server or the like (not shown), and analyzes the document structure of the obtained document data. The document data is, for example, data in Portable Document Format (PDF format), and is horizontally-oriented text in the present embodiment. Instruction manual 10 is, for example, an instruction manual for a household appliance used by user 12. The household appliance is a device used by user 12, and is, for example, a refrigerator-freezer, an LCD television receiver, a washing machine, an air conditioner, a microwave oven, an electric rice cooker, an electric shaver, or the like.

Terminal device 6 is a mobile terminal such as a smartphone or a tablet terminal, and is operated by user 12. Note that terminal device 6 may also be a desktop-type or a laptop-type personal computer.

When user 12 wants to look up how to use the household appliance, for example, user 12 launches a dedicated application of search system 2 by operating terminal device 6. Next, user 12 inputs a search query, which is a character string indicating a question regarding instruction manual 10 of the household appliance, on the search screen of the application. As used herein, "character string" refers to a group of characters, and is a concept including, for example, words, sentences, and passages.

Through this, based on the search query input by user 12, search device 4 searches the document data for which the document structure has been analyzed in advance for a part serving as the basis of the answer, and presents a search result to user 12 by displaying the search result on the smartphone or the like.

### [2. Functional Configuration of Search Device]

The functional configuration of search device 4 according to the embodiment will be described next with reference to FIG. 2. FIG. 2 is a block diagram illustrating the functional configuration of search device 4 according to the embodiment.

As illustrated in FIG. 2, search device 4 includes obtainer 14, analyzer 16, first vector generator 18, storage 20, input acceptor 22, detector 24, second vector generator 26, searcher 28, presented content generator 30, and presenter 32 as a functional configuration.

Obtainer 14 obtains the document data of instruction manual 10 (see FIG. 1) from an external server or the like. Obtainer 14 outputs the document data obtained to analyzer 16.

Analyzer 16 analyzes the document structure of the document data based on font information about the font of the character included in the document data obtained by obtainer 14 and border information about borders included in the document data. By analyzing the document structure of the document data, analyzer 16 obtains a frame, which is a unit of the character strings in the document data.

First vector generator 18 generates a first vector by vectorizing the document data analyzed by analyzer 16. More specifically, first vector generator 18 generates a first sparse vector as the first vector by performing sparse vectorization on the document data analyzed by analyzer 16. Here, a "sparse vector" is a vector with almost zero elements for a word included in the document data. In addition, first vector generator 18 generates a first dense vector as the first vector by performing dense vectorization on the document data analyzed by analyzer 16. Here, a "dense vector" is a vector for which the number of elements for a word included in the document data is not almost zero, and is generated by deep learning or the like for example.

Storage 20 is a memory that stores the document data obtained by obtainer 14, analysis results from analyzer 16, and the first vectors generated by first vector generator 18.

Input acceptor 22 accepts search query inputs made by user 12 (see FIG. 1).

Detector 24 detects an input state of the search query by user 12 based on a result of the accepting by input acceptor 22. Detector 24 detects, as the input state of the search query, either (a) input in progress, (b) input complete, or (c) no input.

Second vector generator 26 generates a second vector by vectorizing the search query received by input acceptor 22. More specifically, second vector generator 26 generates a second sparse vector as a second vector by converting the search query accepted by input acceptor 22 into a sparse vector. Second vector generator 26 also generates a second dense vector as a second vector by converting the search query accepted by input acceptor 22 into a dense vector.

Searcher 28 searches the document data analyzed by analyzer 16 for a part that serves as the basis for an answer to the search query. Specifically, searcher 28 calculates a similarity between the first vector generated by first vector generator 18 and the second vector generated by second vector generator 26, and based on the calculated similarity, extracts a specific character string from the document data as a search result for the search query. Here, if the input state of the search query detected by detector 24 is "input in progress", searcher 28 calculates a similarity between the first sparse vector generated by first vector generator 18 and the second sparse vector generated by second vector generator 26 (an example of a "first similarity"). If the input state of the search query detected by detector 24 is "input complete", searcher 28 calculates a similarity between the first dense vector generated by first vector generator 18 and the second dense vector generated by second vector generator 26 (an example of a "second similarity").

Presented content generator 30 generates the specific character string extracted as a search result by searcher 28, as presented content to be presented to user 12.

Presenter 32 presents the presented content to user 12 by causing terminal device 6 (see FIG. 1) to display the presented content generated by presented content generator 30. Specifically, presenter 32 displays the specific character string extracted by searcher 28 with emphasis in a display format based on the similarity. More specifically, presenter 32 displays the specific character string with highlighting in a display format where the color is darker as the similarity increases.

### [3. Operations by Search Device]

Operations by search device 4 according to the embodiment (a method of controlling search device 4) will be described next with reference to FIGS. 3 to 29.

### [3-1. Overall Operations by Search Device]

The overall operations by search device 4 according to the embodiment will be described next with reference to FIG. 3. FIG. 3 is a flowchart illustrating the flow of overall operations by search device 4 according to the embodiment.

As illustrated in FIG. 3, first, analyzer 16 analyzes the document structure of the document data based on font information about a font of the character included in the document data of instruction manual 10 and border information about borders included in document data (S1).

Next, searcher 28 searches the document data analyzed by analyzer 16 for a part that serves as the basis for an answer to the search query input by user 12 (S2).

Next, presenter 32 presents the specific character string extracted as a search result by searcher 28 to user 12 (S3).

### [3-2. Details of Step S1]

Step S1 (analyzing the document structure) of the flowchart in FIG. 3 will be described in detail with reference to FIG. 4. FIG. 4 is a flowchart illustrating step S1 of the flowchart in FIG. 3 in detail.

As illustrated in FIG. 4, first, obtainer 14 obtains the document data of instruction manual 10 from an external server or the like (S11). Obtainer 14 outputs the document data obtained to analyzer 16. Note that in the present embodiment, it is assumed that the document data includes characters, tables, and diagrams.

Next, analyzer 16 obtains layout elements from the document data obtained by obtainer 14 (S12). Specifically, analyzer 16 obtains characters, tables, diagrams, and coordinates thereof as layout elements from binary data of the document data and pixel data obtained by converting the document data to images, using optical character recognition technology or the like, for example.

If the layout element is text ("text" in S13), analyzer 16 performs text analysis (S14) and obtains a character string for the text layout element. Next, if the analysis processing has not been executed for all the layout elements (NO in S15), the sequence returns to step S13.

In step S13, if the layout element is a table ("table" in S13), analyzer 16 performs table analysis (S16) and obtains a character string for the table layout element. Next, if the analysis processing has not been executed for all the layout elements (NO in S15), the sequence returns to step S13.

In step S13, if the layout element is a diagram ("diagram" in S13), analyzer 16 performs diagram analysis (S17) and obtains a character string for the diagram layout element.

Next, if the analysis processing has been executed for all the layout elements (YES in S15), first vector generator 18 generates the first vectors (the first sparse vector and the first dense vector) by vectorizing the character string for each of the layout elements obtained by analyzer 16 (S18). First vector generator 18 causes the first vector generated to be stored in storage 20.

Next, analyzer 16 determines whether a page included in the document data obtained by obtainer 14 is part of a facing-page spread (S19). Here, a "facing-page spread" is a combination of two pages, on the left and right, into a single page, and is pages for which it is desirable to assign a reading order (described later) for each of the left and right pages.

Next, analyzer 16 estimates the reading order, which is an order in which each layout element is to be read (S20). Analyzer 16 causes the estimated reading order to be stored in storage 20.

Note that in the flowchart in FIG. 4, if tables and diagrams are not included in the document data, steps S16 and S17 described above may be omitted.

### [3-2-1. Details of Step S14]

Step S14 (character analysis) of the flowchart in FIG. 4 will be described in detail with reference to FIG. 5. FIG. 5 is a flowchart illustrating step S14 of the flowchart in FIG. 4 in detail.

As illustrated in FIG. 5, first, analyzer 16 obtains the font information about the font of the character included in the document data, using a document analysis program, optical character recognition technology, or the like, for example (S141). Specifically, analyzer 16 obtains the character, the type of the font of the character, the font size of the character, and the coordinates of the character as the font information.

Next, based on the obtained font information, analyzer 16 estimates a group of characters that have the same font and are adjacent in a horizontal direction (an example of a "first direction") at a distance shorter than the font size as a line in the document data (S142). Note that if the document data is vertically oriented, based on the obtained font information, analyzer 16 may estimate a group of characters that have the same font and are adjacent in a vertical direction (an example of the "first direction") at a distance shorter than the font size as a line in the document data.

Next, analyzer 16 estimates a group of lines that are adjacent in a vertical direction (an example of a "second direction orthogonal to the first direction") and for which the distance therebetween is shorter than the font size as a frame in the document data (S143). Note that if the document data is vertically oriented, analyzer 16 may estimate a group of lines that are adjacent in the horizontal direction (an example of the "second direction orthogonal to the first direction") and for which the distance therebetween is shorter than the font size as the frame in the document data.

Note that in the flowchart of FIG. 5, it is also possible to execute only one of steps S142 and S143 after executing step S141.

### [3-2-1-1. Details of Step S142]

Step S142 (row estimation) of the flowchart in FIG. 5 will be described in detail with reference to FIG. 6. FIG. 6 is a flowchart illustrating step S142 of the flowchart in FIG. 5 in detail.

As illustrated in FIG. 6, first, analyzer 16 searches the document data for a reference character (S1421). Here, the "reference character" is a character that is not present in existing lines and is located at the top left of the overall page. Note that the position of the character is based on the coordinates of the upper-left corner of a rectangle that bounds the character.

Next, if the reference character is not present (NO in S1422), analyzer 16 ends the line estimation processing.

However, if the reference character is present (YES in S1422), analyzer 16 searches for the character that is closest in the horizontal direction to the reference character (called a an "adjacent character" hereinafter) (S1423).

If the adjacent character is present (YES in S1424), analyzer 16 determines whether the adjacent character and the reference character are present in the same line (S1425). Specifically, analyzer 16 determines that the adjacent character and the reference character are in the same line if (a) the adjacent character and the reference character are of the same font type, (b) the adjacent character and the reference character are of the same font size, and (c) positional shift in the vertical direction between the adjacent character and the reference character is less than a threshold with respect to the font size of the reference character. Note that when the font size of the reference character is "1", the threshold is "0.1" in the vertical direction, for example.

If the adjacent character and the reference character are present in the same line (YES in S1425), the sequence returns to step S1423, and steps S1423 to S1425 are executed again.

However, if the adjacent character and the reference character are not present in the same line (NO in S1425), analyzer 16 updates the line subject to the estimation (S1426). The sequence then returns to step S1421, and steps S1421 to S1425 are executed for the updated line.

The sequence then returns to step S1424, and if the adjacent character is not present (NO in S1424), the sequence moves to step S1426 described above.

### [3-2-1-2. Details of Step S143]

Step S143 (frame estimation) of the flowchart in FIG. 5 will be described in detail with reference to FIGS. 7 to 11. FIG. 7 is a flowchart illustrating step S143 of the flowchart in FIG. 5 in detail. FIG. 8 is a flowchart illustrating step S1431 of the flowchart in FIG. 7 in detail. FIG. 9 is a diagram illustrating an example of borders detected in the document data. FIG. 10 is a flowchart illustrating step S1432 of the flowchart in FIG. 7 in detail. FIG. 11 is a diagram illustrating an example of estimated frames in the document data.

As illustrated in FIG. 7, first, analyzer 16 detects borders in document data (S1431). Specifically, as illustrated in FIG. 8, first, analyzer 16 obtains lines included in the document data (called "line segments" hereinafter) and coordinates thereof using, for example, a document analysis program or the like (S14311). As used here, a "line segment" is assumed to include not only a straight line connecting two points, but also a curve connecting two points. When detecting a curve in the document data, analyzer 16 divides the curve into a plurality of divided lines of a length at which the divided lines can be regarded as straight lines, and treats each of the plurality of divided lines as a line segment by detecting the start point and the end point of each of the plurality of divided lines. Note that analyzer 16 may also obtain a boundary at which a background color changes or a boundary of the document data itself as a line segment.

Next, analyzer 16 detects a broken line in the document data (S14312). Specifically, analyzer 16 detects a group of relatively short line segments aligned in a straight line as a broken line in the document data, and obtains the detected broken line as a line segment. Note that if line segments aligned in a straight line are adjacent at an interval of no more than a threshold as a percentage of the lengths of the line segment, analyzer 16 determines that the line segments are part of the same broken line.

Next, analyzer 16 extends the start point and the end point of the line segments by a predetermined value (e.g., 1% of the length of the line segment) (S14313).

Next, if the line segments intersect, analyzer 16 divides each line segment at the intersection (S14314) and treats the intersection as a different intersection.

Next, analyzer 16 obtains, as a border, a plurality of line segments, among the plurality of line segments present in the document data, that form a closed region (S14315). In other words, analyzer 16 obtains, as border information, coordinates of each of the plurality of line segments, among the plurality of line segments included in the document data, that form the closed region, and detects the plurality of line segments as the border.

For example, as indicated by the light solid lines in (a) of FIG. 9, if a plurality of line segments that form a closer region are present in the document data, analyzer 16 detects the plurality of line segments as the border, as indicated by the bold solid lines in (b) of FIG. 9.

Returning to FIG. 7, after step S1431, analyzer 16 estimates frames within the border (S1432). Specifically, as illustrated in FIG. 10, analyzer 16 first searches for a reference line within a frame of interest in the document data (S14321). Here, the "reference line" is a line that is not present in existing frames and is located at the top left of the overall page. Note that the position of the line is based on the coordinates of the upper-left corner of a rectangle that bounds the line.

Next, if the reference line is not present (NO in S14322), analyzer 16 ends the frame estimation processing within the border.

However, if the reference line is present (YES in S14322), analyzer 16 searches for the line that is closest to the reference line in the vertical direction (called an "adjacent line" hereinafter) (S14323).

If the adjacent line is present (YES in S14324), analyzer 16 determines whether the adjacent line and the reference line are present in the same frame (S14325). Specifically, analyzer 16 determines that the adjacent line and the reference line are present in the same frame if the positional shift in the vertical direction between the adjacent line and the reference line is less than a threshold with respect to the font size of the characters constituting the reference line. Note that when the font size of the characters constituting the reference line is "1", the threshold is "0.1" in the vertical direction, for example.

If the adjacent line and the reference line are present in the same frame (YES in S14325), the sequence returns to step S14323, and steps S14323 to S14325 are executed again. In other words, analyzer 16 estimates that the group of lines inside the border is the same frame.

However, if the adjacent line and the reference line are not present in the same line (NO in S14325), analyzer 16 updates the estimated frame (S14326). The sequence then returns to step S14321, and steps S14321 to S14325 are executed for the updated frame.

The sequence returns to step S14324, and if the adjacent line is not present (NO in S14324), the sequence moves to step S14326 described above. Note that analyzer 16 also estimates that a region not surrounded by a border is a single frame, and executes the same processing as described above.

As illustrated in (a) of FIG. 11, if the document data includes character strings and borders surrounding the character strings, analyzer 16 estimates that character strings present within the border constitute the same frame, as illustrated in (b) of FIG. 11. Note that the plurality of borders illustrated in (a) of FIG. 11 correspond to the plurality of frames illustrated in (b) of FIG. 11. For example, in (a) of FIG. 11, the border surrounding the character string "symptom" in the upper-left corresponds to the frame assigned a reading order of "1" on the upper-left (described later) in (b) of FIG. 11.

### [3-2-2. Details of Step S16]

Step S16 (table analysis) of the flowchart in FIG. 4 will be described in detail with reference to FIGS. 12 and 13. FIG. 12 is a flowchart illustrating step S16 of the flowchart in FIG. 4 in detail. FIG. 13 is a diagram illustrating details of step S16 of the flowchart in FIG. 4.

As illustrated in FIG. 12, first, using, for example, a table detection program, image processing, or the like, analyzer 16 obtains a table included in the document data, the coordinates of the table, and a character string included in the table (S161).

Next, analyzer 16 converts the character string obtained from the table into a natural sentence (S162). Specifically, analyzer 16 converts the character string obtained from the table into a natural sentence by, for example, instructing generative artificial intelligence (AI) to "explain the character string obtained from the following table in natural language". Note that analyzer 16 causes the natural sentence obtained from the conversion to be stored in storage 20.

For example, as illustrated in (a) of FIG. 13, if the document data includes a table and character strings included in the table, analyzer 16 performs simple character extraction that mechanically extracts only characters from the table, as illustrated in (b) of FIG. 13. Next, as illustrated in (c) of FIG. 13, analyzer 16 converts the characters extracted from the table into natural sentences, such as, for example, "After 1 minute, the alarm is beeps twice, and the inside light flashes once. After 3 minutes, ...".

### [3-2-3. Details of Step S17]

Step S17 (diagram analysis) of the flowchart in FIG. 4 will be described in detail with reference to FIGS. 14 and 15. FIG. 14 is a flowchart illustrating step S17 of the flowchart in FIG. 4 in detail. FIG. 15 is a diagram illustrating details of step S17 of the flowchart in FIG. 4.

As illustrated in FIG. 14, first, analyzer 16 obtains a diagram included in document data, the coordinates of the diagram, and pixel data of the diagram, using, for example, image processing or the like (S171).

Next, analyzer 16 converts the obtained pixel data into a natural sentence by, for example, image description AI or the like (S172). Note that analyzer 16 causes the natural sentence obtained from the conversion to be stored in storage 20.

For example, if the document data includes a diagram such as that illustrated in (a) of FIG. 15, analyzer 16 converts the diagram into a natural sentence such as "The freezer's ice compartment is removed. The ice compartment is full of ice", as illustrated in (b) of FIG. 15.

### [3-2-4. Details of Step S18]

Step S18 (vectorization) of the flowchart in FIG. 4 will be described in detail with reference to FIG. 16. FIG. 16 is a flowchart illustrating step S18 of the flowchart in FIG. 4 in detail.

As illustrated in FIG. 16, first, first vector generator 18 obtains the analysis result of the document data in instruction manual 10 from analyzer 16 (S181).

At this time, processing for dividing or combining the sentences included in the document data into a sentence of an appropriate length suitable for searching may be performed. Specifically, for example, (a) processing for dividing or combining sentences so as to approach a predetermined number of characters, (b) processing for instructing generative AI to divide a sentence taking into account the overall meaning, and (c) processing for calculating the similarity of two consecutive sentences using dense vectors or the like and determining whether to make a break for the division (i.e., a low similarity with the immediately preceding sentence is taken as the start of a new section), are performed.

Next, first vector generator 18 tokenizes the character strings included in the document data, i.e., divides the character strings included in the document data into tokens (S182).

Next, first vector generator 18 generates a first sparse vector by sparse vectorization of the document data using a sparse vector model generated separately (S183). In addition, first vector generator 18 generates a first dense vector by dense vectorization of the document data using a dense vector model generated separately (S183). First vector generator 18 causes the first sparse vector and first dense vector generated to be stored in storage 20.

An example of a sequence for generating the dense vector model will be described here with reference to FIG. 17. FIG. 17 is a flowchart illustrating an example of a sequence for generating a dense vector model.

As illustrated in FIG. 17, first, a trained model for generating dense vectors from large-scale document data is generated and trained in advance (S41). At this time, an open-source trained model generated by a third party may be used at this time.

Next, the trained model is additionally trained using search queries or the like (S42). The dense vector model is generated in this manner. Note that in the flowchart in FIG. 17, step S42 may be omitted.

An example of a sequence for generating the sparse vector model will be described here with reference to FIG. 18. FIG. 18 is a flowchart illustrating an example of a sequence for generating a sparse vector model.

As illustrated in FIG. 18, first, the analysis result of the document data in instruction manual 10 is obtained from analyzer 16 (S51).

At this time, processing for dividing or combining the sentences included in the document data into a sentence of an appropriate length suitable for searching may be performed. Specifically, for example, (a) processing for dividing or combining sentences so as to approach a predetermined number of characters, (b) processing for instructing generative AI to divide a sentence taking into account the overall meaning, and (c) processing for calculating the similarity of two consecutive sentences using dense vectors or the like and determining whether to make a break for the division (i.e., a low similarity with the immediately preceding sentence is taken as the start of a new section), are performed.

Next, the character strings included in the document data are tokenized by a morphological element analyzer or the like, for example; i.e., the character strings included in the document data are divided into tokens (S52).

Next, weights, which are the importance of each word, are calculated based on the frequency of occurrence of each word (S53), and the results of the calculations are stored. The sparse vector model is generated in this manner. Note that Term Frequency-Inverse Document Frequency (TF-IDF) or Best Match 25 (BM25) can be used as indicators of the importance, for example.

### [3-2-5. Details of Step S19]

Step S19 (spread determination) of the flowchart in FIG. 4 will be described in detail with reference to FIGS. 19 to 21. FIG. 19 is a flowchart illustrating step S19 of the flowchart in FIG. 4 in detail. FIGS. 20 and 21 are diagrams illustrating details of the flowchart in FIG. 19.

As illustrated in FIG. 19, first, analyzer 16 obtains the size of the page included in the document data obtained by obtainer 14 and the coordinates of the frames included in the page (S191).

Next, analyzer 16 determines whether the page included in the document data is a landscape-oriented page (S192).

As illustrated in (a) of FIG. 20, if the page included in the document data is a landscape-oriented page (YES in S192), analyzer 16 determines whether a frame spanning the middle of the page is present (S193).

As illustrated in (a) of FIG. 20, if a frame spanning the middle of the page (indicated by the broken line) is not present (NO in S193), analyzer 16 determines that the page included in the document data is a facing-page spread (S194). In this case, as indicated by the arrows in (b) of FIG. 20, analyzer 16 estimates the reading order for each of the left and right pages through a sequence that will be described later.

Returning to step S193, as illustrated in (a) of FIG. 21, if a frame (indicated by the dot-dash line frame) spanning the middle of the page (indicated by the broken line) is present (YES in S193), analyzer 16 determines that the page included in the document data is not a facing-page spread (S195).

Returning to step S192, as illustrated in (b) of FIG. 21, if the page included in the document data is a portrait-oriented page (NO in S192), analyzer 16 determines that the page included in the document data is not a facing-page spread (S195).

### [3-2-6. Details of Step S20]

Step S20 (reading order estimation) of the flowchart in FIG. 4 will be described in detail with reference to FIG. 22. FIG. 22 is a flowchart illustrating step S20 of the flowchart in FIG. 4 in detail.

As illustrated in FIG. 22, first, for the plurality of frames estimated in step S143 of the flowchart of FIG. 5 described above, analyzer 16 estimates (assigns) a reading order that is an order in which the plurality of frames are read from left to right and top to bottom (an example of a "first reading order") (S201). For example, as illustrated in (b) of FIG. 11 described above, when a total of 14 frames are estimated, analyzer 16 estimates the reading order from "1" to "14", from left to right and top to bottom. Note that the position of each frame is based on the position of the upper-left corner of a rectangle bounding that frame.

Next, for the plurality of lines in the frame, analyzer 16 estimates (assigns) a reading order that is an order in which the plurality of lines are read from left to right and top to bottom (an example of a "second reading order") (S202).

### [3-2-7. Example of Analysis Result]

An example of an analysis result of the document data from analyzer 16 will be described with reference to FIGS. 23 and 24. FIG. 23 is a diagram illustrating an example of document data of an instruction manual. FIG. 24 is a diagram illustrating an example of a document data analysis result from analyzer 16.

Analyzer 16 executes steps S11 to S20 of the flowchart illustrated in FIG. 4 to analyze the document structure of the document data of the instruction manual illustrated in FIG. 23, for example, and obtains an analysis result in table format, as illustrated in FIG. 24. Note that the document data of the instruction manual illustrated in FIG. 23 is, for example, a page describing the ice compartment in the instruction manual for a refrigerator-freezer.

In the example of the analysis result illustrated in FIG. 24, a character string ID (text_id), a character string (text), a frame ID (frame_id), a frame type (frame_type), a reading order (read_order), coordinates (position), a page (page), and a filename (filename) are associated with each other.

The character string (text) is a character string obtained by the character analysis, table analysis, or diagram analysis described above. The character string ID (text_id) is identification (ID) for identifying the character string. The frame ID (frame_id) is an ID for identifying the frame corresponding to the character string. The frame type (frame_type) is the type of the layout element of the frame corresponding to the character string. The reading order (read_order) is the reading order assigned to the frame. The coordinates (position) are coordinates indicating the position of the character string. The page (page) is a page of the document data of the instruction manual. The filename (filename) is the name of the document data of the instruction manual.

### [3-3. Details of Step S2]

Step S2 (document data search) of the flowchart in FIG. 3 will be described in detail with reference to FIGS. 25 to 27. FIG. 25 is a flowchart illustrating step S2 of the flowchart in FIG. 3 in detail. FIG.S 26 and 27 are diagrams illustrating details of step S2 of the flowchart in FIG. 3.

As illustrated in FIG. 25, first, input acceptor 22 accepts an indication that user 12 intends to start a search (S21). Specifically, as illustrated in (a) of FIG. 26, user 12 launches a dedicated application of search system 2 by operating terminal device 6. User 12 then presses search start button 36 on home screen 34 of the application.

Next, input acceptor 22 accepts a selection of a product (e.g., a household appliance) for the search by user 12 (S22). Specifically, as illustrated in (b) of FIG. 26, user 12 presses selection button 38 on home screen 34 to select a refrigerator-freezer, for example. When user 12 presses selection button 38, as illustrated in (c) in FIG. 26, cover 40 of the document data of instruction manual 10 for the refrigerator-freezer is displayed in the upper section of home screen 34. In addition, launch button 42 is displayed in the lower section of home screen 34. Note that if a product owned by user 12 is registered in the application in advance, a selection button for selecting the product may be displayed at the top.

Next, input acceptor 22 accepts an operation to launch the search screen from user 12, and launches the search screen (S23). Specifically, as illustrated in (c) of FIG. 26, user 12 presses launch button 42 on home screen 34. As a result, as illustrated in (a) of FIG. 27, the screen transitions from home screen 34 to search screen 44. Software keyboard 46 and search box 48 are displayed in the lower section of search screen 44. Software keyboard 46 includes input complete key 50 for completing the input of the search query in search box 48.

Next, input acceptor 22 accepts the input of a search query by user 12 (S24). Specifically, as illustrated in (a) of FIG. 27, user 12 inputs a search query into search box 48 by operating software keyboard 46 of search screen 44.

Next, detector 24 determines the input state of the search query input by user 12 (S25). If user 12 has not operated anything on software keyboard 46, detector 24 determines that no search query has been input by user 12 ("no input" in S25).

If user 12 has operated software keyboard 46 but has not pressed input complete key 50, detector 24 determines that the search query input by user 12 is in progress ("input in progress" in S25). Specifically, as illustrated in (a) of FIG. 27, when attempting to input the search query "How long will it take to make ice?", user 12 first inputs the characters "How", which is part of the search query, into search box 48. In this case, searcher 28 executes an input-in-progress search (S26).

If user 12 has operated software keyboard 46 and pressed input complete key 50, detector 24 determines that the search query input by user 12 is complete ("input complete" in S25). Specifically, as illustrated in (b) of FIG. 27, user 12 inputs the search query "How long will it take to make ice?" into search box 48, and presses input complete key 50. In this case, using the pressing of input complete key 50 as a trigger, searcher 28 executes an input complete search (S27). Note that searcher 28 may execute the input complete search using no update being made to the input for a set amount of time after inputting the search query as a trigger.

### [3-3-1. Details of Step S26]

Step S26 (input-in-progress search) of the flowchart in FIG. 25 will be described in detail with reference to FIG. 28. FIG. 28 is a flowchart illustrating step S26 of the flowchart in FIG. 25 in detail.

As illustrated in FIG. 28, first, searcher 28 tokenizes the part of the search query being input into search box 48, i.e., divides the part of the search query into tokens (S261).

Next, second vector generator 26 generates the second sparse vector by converting the part of the search query into a sparse vector using a sparse vector model (S262). At this time, second vector generator 26 preferably uses the same sparse vector model as that used in step S183 of FIG. 16.

Next, searcher 28 calculates a cosine similarity, for example, as a similarity between the first sparse vector stored in storage 20 and the second sparse vector generated in step S262 (an example of a "first similarity") (S263).

Next, searcher 28 obtains a first sparse vector having a similarity that is at least a first threshold, and obtains a character string ID (see FIG. 24) corresponding to the first sparse vector from the document data. Next, searcher 28 obtains a specific character string corresponding to the character string ID as a search result, and obtains highlight coordinates for displaying the specific character string with highlighting (S264).

### [3-3-2. Details of Step S27]

Step S27 (input complete search) of the flowchart in FIG. 25 will be described in detail with reference to FIG. 29. FIG. 29 is a flowchart illustrating step S27 of the flowchart in FIG. 25 in detail.

As illustrated in FIG. 29, first, searcher 28 tokenizes the search query input into search box 48, i.e., divides the search query into tokens (S271).

Next, second vector generator 26 generates a second dense vector by dense vectorization of the search query using a dense vector model (S272). At this time, second vector generator 26 preferably uses the same dense vector model as that used in step S183 of FIG. 16.

Next, searcher 28 calculates a cosine similarity, for example, as a similarity between the first dense vector stored in storage 20 and the second dense vector generated in step S272 (an example of a "second similarity") (S273).

Next, searcher 28 obtains a first dense vector having a similarity that is at least a second threshold, and obtains a character string ID (see FIG. 24) corresponding to the first dense vector from the document data. Next, searcher 28 obtains a specific character string corresponding to the character string ID as a search result, and obtains highlight coordinates for displaying the specific character string with highlighting (S274).

Note that steps S26 and S27 described above may be performed together. Specifically, the similarity between the first sparse vector and the second sparse vector and the similarity between the first dense vector and the second dense vector may be calculated separately, and a final search result may then be obtained by integrating the calculated results through Reciprocal Rank Fusion or the like, for example.

### [3-4. Details of Step S3]

Step S3 (presenting the search result to the user) of the flowchart in FIG. 3 will be described in detail with reference to FIG. 30. FIG. 30 is a flowchart illustrating step S3 of the flowchart in FIG. 3 in detail.

As illustrated in FIG. 30, first, presented content generator 30 determines a highlighted part (coordinates) in the document data based on highlight coordinates obtained by searcher 28 (S31).

Next, presented content generator 30 determines a color darkness (opacity) of the highlighting based on the similarity calculated by searcher 28 (S32). Specifically, presented content generator 30 sets the darkness of the highlighting to be darker as the similarity increases, by normalizing the similarity in the range of "0" to "1" to correspond to the darkness of the highlighting color.

Next, presenter 32 applies the highlighting in the document data based on the details set by presented content generator 30 (S33).

Specifically, as illustrated in (a) of FIG. 27 described above, for example, when input of the search query is in progress, the upper section of search screen 44 displays corresponding page 52 (a page about the ice compartment) containing the specific character string of the search result from the document data. At this time, if a plurality of corresponding pages containing the specific character string of the search result are present, the corresponding page containing the specific character string with the highest similarity is displayed. Then, character string 54 reading "ice compartment" is highlighted on corresponding page 52 as the search result for the input-in-progress search for the search query of "ice", input in search box 48.

In addition, as illustrated in (b) of FIG. 27 described above, for example, when input of the search query is complete, the upper section of search screen 44 displays corresponding page 52 containing the specific character string of the search result from the document data. At this time, if a plurality of corresponding pages containing the specific character string of the search result are present, the corresponding page containing the specific character string with the highest similarity is displayed. Then, on corresponding page 52, character string 56 reading "Ice can be made in as little as 120 minutes." is highlighted as the search result for the input complete search for the search query "How long will it take to make ice?" entered in search box 48.

Other examples of the presentation of the search results by presenter 32 will be described here with reference to FIGS. 31 and 32. FIGS. 31 and 32 are diagrams illustrating another example of the presentation of a search result by presenter 32.

In the example illustrated in (a) of FIG. 31, presenter 32 generates a link for transitioning to the corresponding page of document data based on the search result from searcher 28, and causes terminal device 6 to display the link. For example, if user 12 selects link 58 displayed as "P. 6 Does not cool well...", as illustrated in (b) of FIG. 31, the screen transitions to the corresponding page, in the document data, that is the destination of link 58. On the corresponding page that is linked, character string 60 reading "Does not cool well", which has a relatively high similarity, is highlighted with a relatively dark color, and character string 62 reading "When starting use, wait until inside is sufficiently cool...", which has a relatively low similarity, is highlighted with a relatively light color. Note that in this example, the input-in-progress search described above is not required.

In the example illustrated in FIG. 32, presenter 32 generates and presents summary 64 of an answer based on the search result from searcher 28. At this time, presenter 32 may generate summary 64 using generative AI, for example. Alternatively, presenter 32 may generate a generic response, e.g., "Here are the search results.", as summary 64. Note that in this example, the input-in-progress search described above is not required.

Note that presenter 32 may display a link to an FAQ page on the website of the manufacturer of the household appliance, for example, in addition to highlighting the corresponding part of the document data. In this case, user 12 may be capable of selecting whether to display the link.

### [4. Effects]

In the present embodiment, as described above, analyzer 16 analyzes the document structure of document data based on font information and border information. Through this, even when at least two sentences are separated by a distance, for example, the at least two sentences can be treated as sentence strongly related to each other based on the font information and the border information. As a result, the document structure of the document data can be analyzed accurately.

### [Other Variations]

Although a search device according to one or more aspect have been described thus far based on the foregoing embodiment, the present disclosure is not intended to be limited to the foregoing embodiment. Variations on the foregoing embodiment conceived by one skilled in the art, embodiments implemented by combining constituent elements from different other embodiments, and the like may be included in the scope of one or more aspects as well, as long as they do not depart from the essential spirit of the present disclosure.

For example, in the foregoing embodiment, instruction manual 10 is described as an instruction manual for a household appliance, but instruction manual 10 is not limited thereto, and may instead by an instruction manual for industrial equipment, furniture, a product for daily use, or the like, for example.

Additionally, for example, in the foregoing embodiment, the subject of the search by search device 4 is the document data in instruction manual 10, but the subject is not limited thereto, and the search target may be document data of various types of documents other than instruction manual 10.

Additionally, for example, in the foregoing embodiment, analyzer 16 analyzes the document structure of the document data based on both the font information and the border information, but the analysis is not limited thereto, and the document structure of the document data may be analyzed based on either the font information or the border information.

Additionally, for example, in the foregoing embodiment, presenter 32 highlights the specific character string extracted by searcher 28 in a display format in which the color becomes darker as the similarity increases, but the configuration is not limited thereto, and presenter 32 may highlight the specific character string in a display format in which the characters become bolder as the similarity increases, for example. Alternatively, the display may be highlighted using (a) a display format in which the font size increases as the similarity increases, (b) a display in which the font color brightness increases as the similarity increases, (c) a display in which the font changes to an underline, italic, or an emphasis color when the similarity exceeds a threshold, or (d) a display in which the font color or font size is emphasized in a relative manner by de-emphasizing the font color or font size in parts aside from those where the similarity exceeds a threshold.

In the foregoing embodiments, the constituent elements are constituted by dedicated hardware. However, the constituent elements may be realized by executing software programs corresponding to those constituent elements. Each constituent element may be realized by a program executor such as a CPU or a processor reading out and executing a software program recorded into a recording medium such as a hard disk or semiconductor memory.

Additionally, some or all of the functions of the search device according to the foregoing embodiment may be realized by a processor such as a CPU executing programs.

The present disclosure may be realized by the method described as the control method according to Technique 11 described above. The present disclosure may also be realized by a computer program that implements these methods on a computer, or a digital signal constituting the computer program. Additionally, the present disclosure may also be computer programs or digital signals recorded in a non-transitory computer-readable recording medium such as a flexible disk, a hard disk, a CD-ROM, an MO, a DVD, a DVD-ROM, a DVD-RAM, a BD (Blu-ray (registered trademark) Disc), semiconductor memory, or the like.

### [Industrial Applicability]

The present disclosure can be applied, for example, in a search device or the like for searching document data of an instruction manual for information desired by a user.

### [Reference Signs List]

2 Search system
4 Search device
6 Terminal device
8 Network
10 Instruction manual
12 User
14 Obtainer
16 Analyzer
18 First vector generator
20 Storage
22 Input acceptor
24 Detector
26 Second vector generator
28 Searcher
30 Presented content generator
32 Presenter
34 Home Screen
36 Search start button
38 Selection button
40 Cover
42 Launch button
44 Search screen
46 Software keyboard
48 Search box
50 Input complete key
52 Corresponding page
54, 56, 60, 62 Character string
58 Link
64 Summary

## Claims

1. A search device for searching document data for information desired by a user, the search device comprising:
an obtainer that obtains the document data; and
an analyzer that analyzes a document structure of the document data based on font information about a font of a character included in the document data obtained by the obtainer and border information about a border included in the document data.

2. The search device according to claim 1,
wherein the analyzer analyzes the document structure of the document data by (i) estimating, based on the font information, a group of characters having a same font and for which a distance between adjacent ones of the characters in a first direction is shorter than a font size, as a line in the document data, and (ii) estimating a group of lines, each being the line, for which a distance between adjacent ones of the lines in a second direction orthogonal to the first direction is shorter than the font size, as a frame in the document data.

3. The search device according to claim 2,
wherein the analyzer (i) obtains, as the border information, coordinates of each of a plurality of line segments, among a plurality of line segments included in the document data, that form a closed region, and detects, as the border, the plurality of line segments obtained, and (ii) estimates, based on the border information, a group of the lines present within the border as being a same frame, the frame being the frame estimated by the analyzer.

4. The search device according to claim 2 or 3,
wherein the document data is written horizontally, and
when a plurality of frames, each being the frame, are estimated, the analyzer assigns, to the plurality of frames, a first reading order that is an order for reading the plurality of frames from left to right and top to bottom.

5. The search device according to claim 4,
wherein when a plurality of lines, each being the line, are estimated in the frame, the analyzer further assigns, to the plurality of lines in the frame, a second reading order that is an order for reading the plurality of lines from left to right and top to bottom.

6. The search device according to claim 1, further comprising:
an input acceptor that accepts an input of a search query from the user;
a first vector generator that generates a first vector by vectorizing the document data analyzed by the analyzer;
a second vector generator that generates a second vector by vectorizing the search query accepted by the input acceptor; and
a searcher that calculates a similarity between the first vector and the second vector, and extracts a specific character string from the document data as a search result for the search query based on the similarity calculated.

7. The search device according to claim 6,
wherein the first vector generator generates a first sparse vector and a first dense vector as the first vector,
the second vector generator generates a second sparse vector and a second dense vector as the second vector, and
the searcher (i) calculates a first similarity between the first sparse vector and the second sparse vector as the similarity when input of the search query by the user is in progress, and (ii) calculates a second similarity between the first dense vector and the second dense vector as the similarity when the input of the search query by the user is complete.

8. The search device according to claim 6 or 7, further comprising:
a presenter that presents the search result from the searcher to the user, the presenter displaying the specific character string extracted by the searcher with emphasis in a display format that is based on the similarity.

9. The search device according to claim 8,
wherein the presenter displays the specific character string with highlighting in a display format in which a color darkens as the similarity increases.

10. The search device according to claim 6 or 7, further comprising:
a presenter that presents the search result from the searcher to the user, the presenter generating a summary of an answer based on the search result from the searcher and displaying the summary generated.

11. A control method for a search device for searching document data for information desired by a user, the control method comprising:
(a) obtaining the document data; and
(b) analyzing a document structure of the document data based on font information about a font of a character included in the document data obtained in (a) and border information about a border included in the document data.

12. A program for causing a computer to execute the control method according to claim 11.
